# EUROPEAN PATENT SPECIFICATION

(11) **EP 0 307 060 B1**
(45) Date of publication and mention of the grant of the patent: **25.08.1993**
(21) Application number: 88201965.6
(22) Date of filing: 08.09.1988
(51) Int. Cl.: C01B 33/20, C01B 33/34, B01J 29/02, B01J 29/04

(54) **Process for the preparation of crystalline (metallo) silicates**
Verfahren zur Herstellung kristalliner (Metallo)silikate
Procédé de préparation de (métallo)silicates cristallins

(30) Priority: 09.09.1987 GB 8721202
(43) Date of publication of application: 15.03.1989
(73) Proprietor: SHELL INTERNATIONALE RESEARCH MAATSCHAPPIJ B.V., 2596 HR Den Haag (NL)
(72) Inventor: Van den Berg, Johannes Petrus, NL-1031 CM Amsterdam (NL); De Jong-Versloot, Peterina Cornelia, NL-1031 CM Amsterdam (NL); Kortbeek, Andras Guus Theodorus George, NL-1031 CM Amsterdam (NL); Post, Martin Franciscus Maria, NL-1031 CM Amsterdam (NL)

(56) References cited:
- ACS SYMPOSIUM SERIES, no. 40, 1977, pages 244-257, editor J.R. KATZER; H. KACIREK et al.: "Kinetic studies on the growth of zeolites of the faujasite and N-A type"
- J. CHEM. SOC., CHEM. COMMUN., no. 22, 1983, pages 1416-1418; G. BOXHOORN et al.: "Identification of a double five-ring silicate, a possible precursor in the synthesis of ZSM-5"
- ZEOLITES, vol. 6, no. 5, September 1986, pages 403-411, Guilford, GB; E.J.J. GROENEN et al.: "Double-ring silicate anions in tetraalkyl-ammonium hydroxide/silicate solutions; their possible role in the synthesis of silicon-rich zeolites"
- Z. ANORG. ALLG. CHEM., vol. 384, 1971, pages 43-52; D. HOEBBEL et al.: "Die Konstitution des Tetramethylammoniumsilicats der Zusammensetzung 1,0 N(CH3)4OH.1,0 SiO2.8,0-8,3H2O"
- Z. ANORG. ALLG. CHEM., vol. 494, 1982, pages 31-42; D. HOEBBEL et al.: "Über die Konstitution und Verteilung der Silicatanionen in wässrigen Tetramethylammonium-Silicatlösungen"
- Z. ANORG. ALLG. CHEM., vol. 63, 1980, pages 15-33; V.D. HOEBBEL et al.: "Über die Silicatanionenkonstitutionen in Tetraethylammonium-silicaten und ihren wässrigen Lösungen"
- Z. ANORG. ALLG. CHEM., vol. 521, 1985, pages 61-68; D. HOEBBEL et al.: "Über den Anionenaufbau wässriger Tetra-n-propyl-und Tetraethylammoniumsilicatlösungen"

## Description

The present invention relates to a process for the preparation of crystalline (metallo) silicates, to (metallo) silicates thus prepared and to the use of such silicates in various applications such as catalytic reactions, in particular hydroprocessing reactions.

Synthetic crystalline materials are of general interest. Much attention has been and is being paid to the synthesis of crystalline aluminosilicates,often referred to as synthetic zeolites since they find wide application in industry as molecular sieves, catalyst carriers as well as catalysts, e.g. in catalytic cracking or hydrocracking. Also there is considerable interest in crystalline silicates containing other metals than aluminium in the framework such as iron and gallium.

Many different synthetic approaches have been suggested over the years for the preparation of crystalline materials. The use of templates,in particular organic nitrogen containing compounds such as tetraalkylammonium compounds is one of the best known examples in the synthesis of crystalline silicates and derivatives thereof.

Another approach to the synthesis of crystalline materials resides in the use of seeds to initiate the growing of the appropriate crystalline materials on nuclei introduced on purpose.

Since crystalline (substituted) silicates are in essence polymeric structures, the monomeric building blocs may be of interest to elucidate information on the appropriate polymeric structure based on such monomers. The presence of double-ring silicate anions in tetraalkylammonium hydroxide/silicate solutions has been studied extensively. The presence of different oligomeric silicate anions in tetramethylammonium, tetraethylammonium and tetrabutylammonium silicate solutions has been investigated by Hoebbel c.s. (Z.anorg.allg.Chem. 521 (1985) 61-68) following their earlier work described in Z.anorg.allg. Chem. 509 (1984) 85-95 wherein, for example, double four ring silicate anions containing tetramethylammonium counterparts have been isolated and analyzed. Reference is also made to the work of Kacirek and Lechert (ACS Symposium Series,1977 (40),244-257; Ed. J.R. Katzer) on the preparation of aluminosilicate gels by mixing alkaline aluminate solutions or tetramethylammonium-aluminate solutions with waterglass solutions in an attempt to prepare zeolite A. From this work it appeared that zeolite A could only be obtained with high crystallinity when use was made of zeolite-A type seeds, a certain concentration of sodium ions and a temperature of 88 °C. An in-depth study on double n-ring silicate anions has been published by Groenen c.s., Zeolites,1986,Vol.6,403-411.

Thusfar the potential of using double n-ring containing silicates as starting materials in the synthesis of zeolites has not been recognized. This may well be so since one would expect that the use of a zeolite synthesis mixture based on crystallized double n-ring silicates would not differ substantially from the use of a synthesis mixture obtained by a conventional approach, i.e. based on conventional sources of silica.

It has now surprisingly been found that crystalline silicate containing materials can be prepared in high yield and with high crystallinity when use is made from solutions or gels based on a substantial amount of an appropriate crystallized double ring silicate clathrate.

The present invention thus relates to the preparation of crystalline (metallo) silicates and/or derivatives thereof from a silica source, an organic cation source, a source of water and optionally an alkali(ne earth) metal and/or an aluminium and/or a further metal source wherein a crystalline (metallo) silicate is produced under synthesis conditions from a solution or a gel wherein at least 30%, on atomic basis, of the silicon in said solution or gel originates from one or more crystallized quaternary ammonium or phosphonium double n-ring (metallo) silicate clathrates wherein n is 3, 4 or 5.

It has surprisingly been found that the use of systems based on crystallized double n-ring anions leads to the formation of crystalline structures which are not obtained,or at best in low yield and having inferior crystallinity when the classical solution or seeding techniques are to be applied.

The process according to the present invention is preferably carried out using a solution or a gel wherein at least 40% and in particular more than 50%, on atomic basis, of the silicon in said solution or gel originates from one or more crystallized quaternary ammonium or phosphonium double n-ring silicate clathrates wherein n is 3, 4 or 5.

Without wishing to be bound to any particular theory it would appear that the combination of the ammonium or phosphonium cation and the appropriate double n-ring silicate anion plays an important role in the production of crystalline materials referred to hereinabove.

It will be appreciated that crystallized double n-ring (metallo) silicate clathrates which are used in the process according to the present invention by definition comprise a source of an organic cation, a source of silicon, a source of water and possibly, a source of alkali(ne earth) metal(s). It is of course possible to use additional amounts of one or more of the ingredients of one or more of the sources referred to hereinabove.

It should be noted that the metallo moiety when present in the double n-ring metallo silicate clathrate comprises one or more of the metals aluminium, gallium and iron. It is possible to use an additional amount of one or more appropriate metal compounds of aluminium, gallium and iron.

It has been found that when use is made of double n-ring systems comprising the tetramethylammonium cation as part of the double n-ring silicate, in particular when use is made of the tetramethylammonium-double four ring silicate system (referred to hereinafter as TMA8D4R.xH2O) interesting crystalline silicates, inter alia crystalline silicates, hereinafter referred to as SCS-1, SCS-2 and SCS-4, can be prepared which crystalline silicates per se are the subject of European patent application publication No. 293998. This European patent application describes the preparation of crystalline silicates using a separate tetramethylammonium cation source.

The present invention thus relates in particular to a process for the preparation of silicates having in the as-synthesized form the formula:
(M2/nO)p : (TMA2O)q : SiO2 : (Al2O3)r : (H2O)s
wherein M represents an alkali(ne earth) metal of valency n and TMA represents a tetramethylammonium cation and wherein
0 ≦ p < 0.3; 0.01 < q < 0 4; 0 ≦ r < 0.01 and 0 < s < 4.

Examples of crystalline silicates which can be suitably prepared using the process according to the present invention comprise structures indicated as SCS-1 having in the as-synthesized form the formula
(0.10-0.20) TMA2O ; SiO2 : (Al2O3)r : (0.5-1.5) H2O
wherein
r < 0.005 and having an X-ray diffraction pattern containing at least the lines as given in Table I; structures indicated as SCS-2 having in the as-synthesized form the formula
(0-0.1) Na2O : (0.025-0.20) TMA2O : SiO2 : (Al2O3)r : (0.1-1.5 H2O) wherein r < 0.01 and having an X-ray diffraction pattern containing at least the lines as given in Table II;and structures indicated as SCS-4 having in the as-synthesized form the formula
(0-0.1) Na2O : (0.05-0.25) TMA2O : SiO2 : (Al2O3)r : (0.3-1.5) H2O wherein r < 0.01 and having an X-ray diffraction pattern containing at least the lines as given in Table III.

It should be noted that crystalline silicates having a SCS-structure are preferably prepared using solutions or gels containing double four ring silicate clathrates and wherein the organic cation source is based on tetramethylammonium (or phosphonium) moieties. The tetramethylammonium moieties form part of the clathrate used in the synthesis but it is also possible to use an additional source of tetramethylammonium (or phosphonium) cations.

Normally, good results will be obtained when fairly concentrated solutions or gels of the starting materials are used. It is also possible to add a further organic nitrogen or phosphorus compound to the solution or gel to be used as the starting material. Suitable nitrogen compounds comprise for example diethanol amine, pyridine and tetraalkylammonium halides such as tetra(m)ethylammonium bromide or chloride and tetrapropylammonium bromide or chloride. If desired small amounts of inorganic acids such as sulphuric acid can also be used in the process according to the present invention. Normally, crystalline (alumino) silicates having good crystallinity will be obtained.

When the process according to the present invention is carried out in the presence of an aluminium compound (or aluminium powder and an organic nitrogen base) aluminium may be incorporated into the crystalline silicate structure.

Crystalline silicates which can be prepared in fair yields by the process according to the present invention using TMA double four ring (metallo) silicate clathrates (apart from the structures indicated as SCS) comprise dodecasil-3C, TMA-zeolite T and TMA-sodalite.

It has been found that crystalline zeolites of the ZSM-12 type are preferably prepared from solutions or gels based on double three ring silicate clathrates in the presence of a small amount of an aluminium compound (or a precursor thereof). It is possible, however, to produce ZSM-12 type structures without having aluminium or an aluminium compound present in the reaction mixture. Other zeolites which can be suitably prepared from solutions or gels based on double three ring silicate clathrates comprise zeolite beta, zeolite T and zeolite L. Preferably, the double three ring silicate clathrates used in the synthesis of ZSM-12, zeolite beta and zeolite T contain a tetraethylammonium moiety as the cationic part in the clathrate structure.

The process according to the present invention is normally carried out at temperatures between 75 °C and 250 °C, in particular between 125 °C and 225 °C. Normally, crystalline structures will be produced when the forming solution or gel has been kept under the appropriate conditions for a period of time ranging between 12 and 750 hours allowing for the proper structure to be formed and in reasonable amounts. Preferably,the process according to the present invention is carried out for a period of time ranging between 24 and 500 hours.

If desired, the mixtures to be used in the process according to the present invention may be subjected to agitation to produce the desired synthetic crystalline (metallo) silicate.

The compounds produced by the process according to the present invention can be used in many outlets: as molecular sieves, optionally after (partial) drying and/or calcining, as well as catalysts and/or catalyst carriers. In particular, aluminium-containing crystalline silicates can be used as carriers (or as catalysts) in many conversion processes both in the chemical and in the oil industry. Those skilled in the art will know the processes which can be operated best with the crystalline (metallo) silicates produced in accordance with the process according to the present invention.

If desired, one or more metals or metal compounds having or causing catalytic activity can be incorporated into the crystalline (metallo) silicates as produced by a process in accordance with the present invention. They may be incorporated by well-known techniques such as, for instance,impregnation and ion-exchange. The choice of the appropriate metal(s) or metal compound(s) will depend on the envisaged catalytic application(s). The invention will now be illustrated by means of the following Examples.

### EXAMPLE I

### a) Synthesis of TMA8D4R.65H2O.

To 546 g of a tetramethylammonium hydroxide (TMAOH) solution in water (Fluka, 25%w) was added 60 g of silicic acid (Baker, dried at 350 °C) and 400,5 g of H2O. The mixture obtained having a molar composition : 1.5 TMAOH : 1 SiO2 : 45 H2O was stirred until a clear solution was obtained. The mixture was kept at 4 °C to allow formation of crystals having the composition TMA8D4R.65H2O (octa tetramethylammonium double four ring silicate clathrate). The crystals of TMA8D4R.65H2O were obtained in a yield well over 80% calculated on SiO2. The expression D4R stands for (Si8O20). The TMA-D4R silicate clathrate crystals obtained contained 95% of double four rings and not more than 5% of material not identifiable as double n-rings of any kind as determined by solid state NMR and chemical trapping methods as described in Zeolites,1986,Vol.6,pages 403-411.

### b) Synthesis of SCS-1.

15 g of TMA8D4R.65H2O was dissolved in 9.4 g of water and stirred at 90 °C for a period of one hour. The molar composition of the starting mixture was : 1 TMA : 1 SiO2 : 17 H2O. The mixture was then kept at 150 °C for a period of 72 hours under static conditions in a teflon-lined autoclave. After cooling 1.8 g of SCS-1 having 100% crystallinity was obtained. Its chemical composition was: 27%w Si, 15.1%w C, 5.6%w H and 3.3%w N. The yield, calculated on Si amounted to 32%. Its X-ray diffraction pattern was determined and contained as major lines those indicated in Table 1.

**TABLE 1**

| D spacing (A) | Intensity |
|---|---|
| 13.8 +/- 0.2 | VS |
| 4.8 +/- 0.1 | M |
| 3.8 +/- 0.1 | M |
| 3.40 +/- 0.05 | M |
| 2.70 +/- 0.05 | M |

### c) Synthesis of SCS-1 using less H₂O.

The experiment described in Example Ib was repeated using the same amount of TMA8D4R.65H2O and dissolving it in 7.3 g H₂O under stirring at 90 °C for a period of one hour. The molar composition of the starting mixture was : 1 TMA : 1 SiO2 : 15 H₂O. The mixture was kept at a temperature of 150 °C for a period of 336 hours under static conditions in a teflon lined autoclave. After cooling 1.4 g of SCS-1 having a crystallinity of 100% was obtained. Its chemical composition was: 28.4%w Si, 14.9%w C, 5.6%w H and 4.5%w N. The yield, calculated on Si amounted to 27%. Its X-ray diffraction pattern was similar to that determined for the product described in Example Ib.

### d) Synthesis of SCS-1 in the presence of tetraethylammonium bromide.

The experiment described in Example Ic was repeated but 1.2 g tetraethylammonium bromide (TEABr) was added to the mixture of TMA8D4R.65H2O and water described in Example Ic. The molar composition of the starting mixture was: 1 TMA : 0.1 TEA :1 SiO2 : 15 H₂O. The mixture was kept at 150 °C for a period of 168 hours under otherwise identical conditions. After cooling, 1.3 g of SCS-1 having a crystallinity of 100% was obtained. The yield, calculated on Si amounted to 25%. A similar X-ray diffraction pattern was determined once again.

### e) Synthesis of SCS-1 in the presence of various components.

The experiment described in Example Id was repeated several times but using other components in stead of TEABr. In all cases SCS-1 having a crystallinity of 100% was obtained. The components added, the yields in g and the yields on Si are given in Table I-A

**TABLE I-A**

| component | yield (g) | yield (% on Si) |
|---|---|---|
| tetrapropyl ammonium bromide | 1.4 | 27 |
| tetrabutyl ammonium bromide | 2.0 | 35 |
| pyridine | 0.5 | 10 |

### f) Synthesis of SCS-1 in the presence of sulphuric acid.

15 g of TMA8D4R.65H2O was dissolved in 6.4 g water and 0.5 g sulphuric acid was added and the mixture was subjected to stirring for a period of one hour at 90 °C. The molar composition of the starting mixture was : 1 TMA : 1 SiO2 : 15 H2O : 0.10 H2SO4 (OH/Si ratio 0.8). The mixture was then kept at 150 °C for a period of 72 hours under static conditions in a teflon lined autoclave. After cooling 1.3 g of SCS-1 having a crystallinity of 100% was obtained Yield on Si: 25%.

### g) Synthesis of SCS-1 in the presence of tetrapropylammonium chloride.

15.1 g of TMA8D4R.65H2O was dissolved in 6.4 g water and 6.6 g tetrapropylammonium chloride (TPACl) was added. The mixture was stirred at 90 °C for a period of one hour. The composition of the starting material was : 1 TMA : 0.6 TPA : 1 SiO2 : 15 H2O. Under the conditions as described in Example If 0.3 g SCS-1 having a 100% crystallinity was obtained. Its chemical composition amounted to:
29.1%w Si, 15.1%w C, 5.7%w H and 3.9%w N. The yield calculated on Si was 6%.

### h) Synthesis of SCS-1 in the presence of Al/TMAOH.

17.2 g of TMA8D4R.65H20 was dissolved in 3.8 g water. Separately 27 g aluminium was dissolved in 546 g 25% TMAOH solution and 385 g water.0.05 g of the Al/TMAOH solution was added to the solution of the double four ring clathrate. The resulting mixture was stirred at 90 °C for a period of one hour. The molar composition of this starting mixture was:
1 TMA : 1 SiO2 : 0.001 Al : 15 H2O. The mixture was then kept at a temperature of 150 °C for a period of 168 hours in a teflon lined autoclave. After cooling 2.5 g SCS-1 having a crystallinity of 100% was obtained. Its X-ray diffraction pattern contained several additional peaks to the characteristic SCS-1 pattern.

### COMPARATIVE EXAMPLE A

An experiment was carried out to investigate whether the material identified as SCS-1 could be obtained starting from the conventional sources in amounts reflecting the composition of the clathrates described hereinbefore. 38.0 g of SiO2 was dissolved in 230.1 g of a 25%w TMAOH solution and 168.83 g H₂O resulting in the following molar composition: 1 TMAOH : 1 SiO2 : 30 H₂O. Successively, 170 g water was evaporated under vacuum from this solution. The final molar composition of the starting material was 1 TMAOH : 1 SiO2 : 15.1 H₂O. This final mixture was heated at 150 °C under static conditions in a teflon lined autoclave. Even after 144 hours no solid components of any kind had been formed.

### EXAMPLE II

### a) Synthesis of SCS-2.

15 g of TMA8D4R.65 H₂O crystals was dissolved in 9.4 g H₂O and 0.34 g sodium chloride was added. The mixture was stirred for one hour at 90 °C. The molar composition of this mixture was:
0.1 Na : 1 TMA : 1 SiO2 : 17 H₂O. The mixture was kept at 200 °C for a period of 70 hours under static conditions in a teflon lined autoclave. After cooling, 4.1 g of SCS-2 having a 100% crystallinity was obtained. Its chemical composition was: 36.4w% Si, 7.6%w C, 2.8%w H and 1.9%w N. The yield, calculated on Si amounted to about 90%. Its X-ray diffraction pattern contained as major lines those given in Table II.

**TABLE II**

| D spacing (A) | Intensity |
|---|---|
| 9.0 +/- 0.1 | M |
| 8.3 +/- 0.1 | M |
| 6.6 +/- 0.1 | M |
| 6.3 +/- 0.1 | M |
| 4.5 +/- 0.1 | M |
| 4.3 +/- 0.1 | M |
| 4.2 +/- 0.1 | M |
| 4.0 +/- 0.1 | VS |

### b) Synthesis of SCS-2 using less water.

The experiment described in Example IIa was repeated by dissolving 15 g of TMA8D4R.65 H₂O crystals in 7.3 g water and adding 0.34 g sodium chloride. The mixture was stirred at 90 °C for a period of one hour. The molar composition of the starting mixture was : 0.1 Na : 1 TMA : 1 SiO2 :15 H2O.
The mixture was then kept at 200 ° centigrade for a period of 48 hours under the usual conditions.3.1 g of SCS-2 was obtained after cooling.

### COMPARATIVE EXAMPLE B

364 g of a 25%w solution of tetramethylammonium hydroxide (ex Fluka) and 60 g of silica (ex Baker, dehydrated at 350 °C) were mixed together to form a mixture having a molar composition: 1 tetramethylammonium hydroxide : 1 SiO2 : 15 H2O. This mixture was kept under static conditions at 150 °C for a period of 168 hours. After this time a small amount of the silicate SCS-2 could be isolated. The mixture was kept under the same conditions for another 168 hours yielding SCS-2 together with amorphous material. The molar composition of the crystalline compound as-synthesized was: 0.05 TMA2O : SiO2 : (Al2O3)r : 0.6 H2O wherein r < 0.01. The amount of SCS-2 obtained was 15%w. Its X-ray diffraction pattern contained as major lines those given in Table II.

### EXAMPLE III - Synthesis of SCS-4.

15 g of TMA8D4R.65 H₂O crystals were dissolved in 7.3 g water and 0.34 g sodium chloride was added. The resulting mixture was stirred at 90 °C for a period of one hour. The molar composition of the mixture was: 0.1 Na : 1 TMA : 1 SiO2 : 15 H₂O. The mixture was then kept for a period of 336 hours at a temperature of 150 °C under static conditions in a teflon lined autoclave. After cooling, SCS-4 could be obtained having 100% crystallinity in a yield of 1.3 g. The chemical composition of the product was: 30.5%w Si, 7.9%w C, 4.0%w H, 2.6%w N and 3.8%w Na. The yield, calculated on Si amounted to 24%. Its X-ray diffraction pattern contained as major lines those given in Table III.

**TABLE III**

| D spacing (A) | Intensity |
|---|---|
| 11.3 +/- 0.2 | M |
| 5.7 +/- 0.1 | VS |
| 4.2 +/- 0.1 | M |
| 3.8 +/- 0.1 | S |
| 3.25 +/- 0.05 | M |
| 3.10 +/- 0.05 | M |
| 2.85 +/- 0.05 | M |

### COMPARATIVE EXAMPLE C

An experiment was carried out to investigate whether the material identified as SCS-4 could be obtained starting from conventional sources in amounts reflecting the composition of the clathrates described hereinbefore.
38.0 g SiO2 was dissolved in 230.1 g 25%w TMAOH solution and 168.83 g water was added. Moreover, 3.7 g sodium chloride was added to this mixture. The overall composition of the mixture thus obtained was: 0.1 Na : 1 TMAOH : 1 SiO2 : 30 H2O.
Water was evaporated from this mixture to such an extent that a mixture was left having a molar composition : 0.1 Na : 1 TMAOH : 1 SiO2 : 15 H2O.
This mixture was then heated at a temperature of 150 °C under static conditions in a teflon lined autoclave. Even after 336 hours no solid compound of any kind had been formed.

### EXAMPLE IV

### a) Synthesis of Dodecasil-3C.

15 g of TMA8D4R.65 H₂O was dissolved in 9.4 g water and stirred for one hour at 90 °C. The molar composition of the mixture was: 1 TMA : 1 SiO2 : 17 H2O. The mixture was then kept under static conditions in a teflon lined autoclave for a period of 72 hours at a temperature of 200 °C. After cooling 4.3 g of product was obtained (100% yield on Si) which was identified as Dodecasil-3C + a small amount of an amorphous phase. The chemical composition of the product was: 41.5%w Si, 3.2%w C, 1.7%w H and 0.8 %w N. Its X-ray diffraction pattern contained as major lines those given in Table IV.

**TABLE IV**

| D spacing (A) | Intensity |
|---|---|
| 5.9 +/- 0.1 | M |
| 5.6 +/- 0.1 | M |
| 4.8 +/- 0.1 | M |
| 4.5 +/- 0.1 | M |
| 4.0 +/- 0.1 | M |
| 3.7 +/- 0.1 | S |
| 3.43 +/- 0.05 | M |
| 3.29 +/- 0.05 | S |

### b) Synthesis of Dodecasil-3C in the presence of NaCl.

15 g of TMA8D4R.65 H₂O was dissolved in 7.3 g water and 0.34 g sodium chloride was added to this mixture. The total mixture was then stirred for a period of one hour at 90 °C. The molar composition of said mixture was: 0.1 Na : 1 TMAOH : 1 SiO2 : 15 H₂O. The mixture was then kept at 200 °C for a period of 120 hour under conditions as described in Example IVa. After cooling, 3.3 g of Dodecasil-3C (yield on Si : 77%) was obtained.

### EXAMPLE V - Synthesis of TMA-zeolite T.

15 g of TMA8D4R.65 H₂O was dissolved in 51.6 g tetrapropylammonium hydroxide (TPAOH) solution (20%w TPAOH) and 0.2 g sodium hydroxide was added. Separately, 3.81 g of aluminium tri isopropoxide was dissolved in 8.19 g TMAOH solution (25%w TMAOH) and 13.74 g of water. 7.1 g of this solution was added to the silicate solution. The mixture was heated at 90 °C for one hour. The molar composition of the mixture was: 1.1 TMA : 1.0 TPA : 0.1 Na : 1 SiO2 : 0.1 AlO2- : 58.0 H₂O : 0.3 C3H7OH. (OH-/Si ratio 2.1 expressed as (mol OH- mol Al)/mol SiO2).

The mixture was kept at 150 °C for a period of 72 hours under static conditions in a teflon lined autoclave. After cooling, 1.0 g of TMA-zeolite T was obtained. (Yield on Si : 20%). Its chemical composition was: 1.23%w Na, 30.8%w Si, 9.5%w Al, 0.85%w N and 2.07%w H. Its X-ray diffraction pattern contained as major lines those given in Table V.

**TABLE V**

| D spacing (A) | Intensity |
|---|---|
| 11.5 +/- 0.1 | M |
| 6.6 +/- 0.1 | M |
| 4.3 +/- 0.1 | M |
| 3.7 +/- 0.1 | S |
| 2.88 +/- 0.05 | VS |
| 2.86 +/- 0.05 | S |

### EXAMPLE VI - Synthesis of TMA-sodalite.

A TMA-aluminate solution was prepared by dissolving 4.61 g Al(iOC3H7)3 in 9.87 g 25%w TMAOH solution (ex Fluka) and 16.45 g H₂O (solution A).In 7.3 g of solution A 15.0 g of TMA8D4R.60 H₂O silicate clathrate crystals were dissolved. To the mixture obtained were added 0.8 g H₂O, 1.51 g sodium chloride and 1.25 g sulphuric acid. The mixture thus obtained was heated for one hour at 90 °C. The molar composition of the mixture was: 0.5 Na : 1.12 TMA : 1 SiO2 : 0.1 AlO2- : 0.24 (SO4)2- : 0.3 C3H7OH : 15.2 H2O. (OH-/Si ratio 0.53).

This mixture was kept under static conditions at 100 °C in a teflon lined autoclave during three days. After cooling, 3.0 g crystalline product, identified as TMA-sodalite was obtained. The yield on Si amounted to 70% (on Al : 100%). The X-ray diffraction pattern contained the characteristic lines for sodalite.

### EXAMPLE VII

### a) Synthesis of TEA6D3R.x H2O.

To 735 g of a tetraethylammonium hydroxide (TEAOH) solution in water (40%w ex Fluka) 60 g of silicic acid (ex Baker, dried at 350 °C) was added. Thereafter 153 g of water was removed by evaporation. This mixture having a molar composition: 2 TEAOH : 1 SiO2 : 16 H2O was stirred until a clear solution was obtained. It was kept at 4 °C to allow crystals of TEA6D3R.x H2O (hexa tetraethylammonium double three ring silicate clathrate) to be formed. On the basis of chemical analysis the actual composition was calculated to be TEA6D3R.TEAOH.56 H2O. The yield of the crystals amounted to 66%, calculated on SiO2. The expression D3R stands for (Si6O15). Of the TEA-D3R silicate clathrate crystallized material obtained 82% could be identified as proper D3R, some D4R being present as well together with some material not present in the form of DnR as verified by the techniques referred to in Example Ia.

### b) Synthesis of ZSM-12.

19.3 g of the clathrate crystals as described in Example VIIa were dissolved in 4.6 g water. Separately, 0.27 g of aluminium powder was dissolved in 6.89 g of a 40%w solution of TEAOH and 3.8 g water. 1.37 g of the aluminate solution thus obtained was added to the TEA-silicate solution. Finally, 0.29 g sodium chloride was added to this mixture. The resulting overall molar composition was: 0.1 Na : 1.2 TEA : 1 SiO2 : 0.025 Al : 15 H2O.

After heating this mixture during 7 days at 150 °C under static conditions 2.3 g of a solid product was obtained containing besides amorphous material traces of ZSM-12.

When a mixture as described hereinabove was heated in the teflon lined autoclave whilst stirring under otherwise identical conditions, 3.6 g of a crystalline product could be obtained after cooling. It contained the crystalline products ZSM-12, zeolite beta and a Na, H-Si2O5 phase.

### c) Synthesis of ZSM-12 using more water.

19.3 g of the clathrate crystals as described in Example VIIa were dissolved in 18.1 g water. To this solution were added 1.37 g of the aluminate solution as described in Example VIIb and 0.29 g sodium chloride resulting in an overall molar composition: 0.1 Na : 1.2 TEA : 1 SiO2 : 0.025 Al : 30 H20.

Heating this mixture at 150 °C during 168 hours under stirring in a teflon lined autoclave resulted in the formation of 1.8 g crystalline product identified as ZSM-12 containing traces of zeolite beta. The yield amounted to 49% on Si. The chemical composition was: 37.3%w Si, 0.44%w Al, < 0.1%w Na, 8.02%w C, 1.88%w H and 1.18%w N. Its X-ray diffraction pattern contained the characteristic lines of ZSM-12. The experiment as described in Example VIIb was repeated but adding also 1.25 g sulphuric acid to the starting mixture, thus reducing the effective OH-/Si ratio from 1.2 to 0.7. The mixture thus obtained was heated at 150 °C for a period of 168 hours under stirring. After cooling, 3.7 g crystalline product could be obtained. It contained mainly ZSM-12 with some zeolite beta. The yield on Si was 100%. The chemical composition of the product was: 37.5%w Si02, 0.51%w Al, <0.21%w Na, 8.5%w C, 2.1%w H and 1.3 %w N.

### d) Synthesis of ZSM-12 in the absence of aluminate.

The experiment described in Example VIIc was repeated but for the presence of aluminate. The molar composition of the mixture to be subjected to hydrothermal conditions was: 1.2 TEA : 1 SiO2 : 14.8 H2O. This mixture was kept under stirring at 150 °C for a period of 7 days. After cooling, 1.8 g of ZSM-12 (100% crystallinity) could be obtained.

### COMPARATIVE EXAMPLE D

An experiment was carried out to investigate whether zeolite ZSM-12 could be synthesized from conventional sources using the various components in the molar ratios as reflected in Example VIIb. 30 g of SiO2-gel was dissolved in 183.8 g TEAOH solution (40%w) and 24.8 g H₂O. To 23.9 g of this solution was added 0.29 g sodium chloride and 0.034 g of aluminium powder was dissolved therein. The resulting molar composition amounted to: 1 TEA :0.1 Na : 1 SiO2 : 0.025 Al : 15 H2O. Heating this mixture at 150 °C during 3 days under static conditions did not result in any crystalline product. After continuing the heating for three more days crystalline zeolite W was obtained in an amount of 0.4 g (100% crystallinity).

### EXAMPLE VIII

### a) Synthesis of zeolite beta.

19.3 g of the clathrate crystals as described in Example VIIa were dissolved in 4.6 g water. To this solution were added 0.29 g sodium chloride, 1.4 g TMA-aluminate solution as described in Example VIIb and 1.215 g 95%w sulphuric acid. The mixture was heated at 90 °C for one hour. Its molar composition was: 0.1 Na : 1.2 TEA :1 SiO2 : 0.026 AlO2- : 16 H2O : 0.25 (S04)2-(OH-/Si ratio 0.70).

The mixture was kept under static conditions at 150 °C for a period of seven days. After cooling, 3.3 g product was obtained containing zeolite beta and some amorphous material.

### b) Synthesis of zeolite beta from a mixture having a low aluminium concentration.

0.27 g Al-powder was dissolved in 6.9 g TEAOH (40%) solution and 3.8 g water. 0.055 g of the solution obtained was added to a solution of 19.3 g of clathrate crystals as described in Example VIIa dissolved in 4.6 g water. The molar composition of the the final solution was 1.2 TEA : 1 SiO2 : 0.001 Al : 14.9 H₂O.

This mixture was kept under static conditions at a temperature of 150 °C for a period of 7 days. After cooling a small amount of zeolite beta was obtained together with a second crystalline phase.

### EXAMPLE IX- Synthesis of zeolite L.

19.3 g of the clathrate crystals as described in Example VIIa were dissolved in 4.6 g water. To this solution 5.5 g of a TEA-aluminate solution as described in Example VIII b was added. The molar composition of this mixture was :1.4 TEA : 1 SiO2 : 0.1 AlO2- : 19.0 H2O. The mixture was kept under static conditions for a period of 7 days at a temperature of 150 °C. 1.4 g of product could be isolated after cooling. It had a 100% crystallinity and it X-ray diffraction pattern contained as major lines those given in Table V hereinabove.

### EXAMPLE X- Synthesis of Linde-type zeolite T.

19.3 g of the clathrate crystals as described in Example VIIa were dissolved in 4.6 g water. To this solution were added 1.4 g of a TEA-aluminate solution as described in Example VIII b. The molar composition of the final mixture amounted to: 1.2 TEA : 1 SiO2 : 0.026 AlO2- : 15.9 H2O.

The mixture was kept under static conditions at a temperature of 150 °C for a period of 7 days. After cooling a solid crystalline material was obtained containing zeolite L (LTL) as well as some amorphous material.

## Claims

1. Process for the preparation of crystalline (metallo) silicates and/or derivatives thereof from a silica source, an organic cation source, a source of water and optionally an alkali(ne earth) metal and/or an aluminium and/or a further metal source wherein a crystalline (metallo) silicate is produced under synthesis conditions from a solution or a gel wherein at least 30%,on an atomic basis, of the silicon in said solution or gel originates from one or more crystallized quaternary ammonium or phosphonium double n-ring (metallo) silicate clathrates wherein n is 3,4 or 5.

2. Process according to claim 1, wherein a solution or a gel is used wherein at least 40%, on atomic basis, of the silicon in said solution or gel originates from one or more crystallized quaternary ammonium or phosphonium double n-ring (metallo) silicate clathrates wherein n is 3, 4 or 5.

3. Process according to claim 2, wherein a solution or a gel is used wherein more than 50%, on atomic basis, of the silicon in said solution or gel originates from one or more crystallized quaternary ammonium or phosphonium double n-ring (metallo) silicate clathrates wherein n is 3, 4 or 5.

4. Process according to one or more of claims 1-3 wherein the temperature is kept between 75 °C and 250 °C, in particular between 125 °C and 225 °C.

5. Process according to one or more of claims 1-4 wherein the forming solution or gel is kept for a period between 12 and 750 hours under crystal-forming conditions,in particular between 24 and 250 hours.

6. Process according to one or more of claims 1-5 wherein use is made of double n-ring systems comprising the tetramethylammonium cation as part of the double n ring silicate.

7. Process according to claim 6 wherein use is made of double four ring systems comprising the tetramethylammonium cation to produce SCS-1, SCS-2, SCS-4, dodecasil-3C, TMA-zeolite T or TMA-sodalite.

8. Process according to one or more of claims 1-5 wherein use is made of a double n-ring system comprising the tetraethylammonium cation as part of the double n ring silicate.

9. Process according to claim 8 wherein use is made of a double three ring system comprising the tetraetylammonium cation to produce ZSM-12, zeolite beta, zeolite T or zeolite L.

10. Process according to one or more of claims 1-9 wherein use is made of a solution or gel containing additionally a source of an organic cation.

11. Process according to claim 10 wherein use is made of diethanol amine, pyridine or a tetraalkylammonium halide.

12. Process according to claim 11 wherein use is made of tetra(m)ethylammonium bromide or chloride or of tetrapropylammmonium bromide or chloride.

13. Process according to one or more of claims 1-9 wherein use is made of the presence of an inorganic acid, in particular sulphuric acid, in the solution or gel.

14. Process according to one or more of claims 1-13 wherein use is made of a metallo silicate clathrate in the starting solution or gel.

15. Process according to claim 13 wherein use is made of an alumino silicate clathrate or a precursor thereof in the starting solution or gel.

16. Process according to one or more of claims 1-15 wherein use is made of a further metal source in the starting solution or gel.

17. Process according to claim 16 wherein use is made of a metal source containing (a compound of) aluminium, gallium or iron.

18. Crystalline (metallo) silicates whenever prepared according to a process as claimed in one or more of the preceding claims.

19. Use of crystalline (metallo) silicates as produced in accordance with a process according to one or more of claims 1-17, optionally after (partial) drying and/or calcining, as molecular sieves.

20. Use of crystalline (metallo) silicates as produced in accordance with a process according to one or more of claims 1-17, optionally after (partial) drying and/or calcining as catalysts or catalyst carriers.

## Patentansprüche

1. Verfahren für die Herstellung von kristallinen (Metallo)silikaten und/oder deren Derivaten aus einer Quelle für SiO₂, einer Quelle für organisches Kation, einer Quelle für Wasser und gegebenenfalls einer Quelle für ein Alkali- und/oder Erdalkalimetall und/oder für Aluminium und/oder einer weiteren Metallquelle, in welchem Verfahren ein kristallines (Metallo)silikat unter Synthesebedingungen aus einer Lösung oder einem Gel erzeugt wird, in welcher (welchem) mindestens 30 % des Siliciums, berechnet auf atomarer Basis, in besagter Lösung oder besagtem Gel aus einem oder mehreren kristallisierten quaternären Ammonium- oder Phosphonium-Doppel-n-Ring-(Metallo)silikat-Clathrat(en) stammen, wobei n den Wert 3, 4 oder 5 hat.

2. Verfahren nach Anspruch 1, in welchem eine Lösung oder ein Gel verwendet wird, in welcher (welchem) mindestens 40 % des Siliciums, berechnet auf atomarer Basis, in besagter Lösung oder besagtem Gel aus einer oder mehreren kristallisierten quaternären Ammonium- oder Phosphonium-Doppel-n-Ring-(Metallo)silikat-Clathrat(en) stammen, wobei n den Wert 3, 4 oder 5 hat.

3. Verfahren nach Anspruch 2, in welchem eine Lösung oder ein Gel verwendet wird, in welcher (welchem) mehr als 50 % des Siliciums, berechnet auf atomarer Basis, in besagter Lösung oder besagtem Gel aus einem oder mehreren kristallisierten quaternären Ammonium- oder Phosphonium-Doppel-n-Ring-(Metallo)silikat-Clathrat(en) stammen, wobei n den Wert 3, 4 oder 5 hat.

4. Verfahren nach irgendeinem der Ansprüche 1 bis 3, in welchem die Temperatur zwischen 75°C und 250°C und insbesondere zwischen 125°C und 225 °C gehalten wird.

5. Verfahren nach irgendeinem der Ansprüche 1 bis 4, in welchem die zur Bildung eingesetzte Lösung bzw. das Gel während 12 bis 750 und insbesondere zwischen 24 und 250 Stunden unter kristallbildenden Bedingungen gehalten wird.

6. Verfahren nach irgendeinem der Ansprüche 1 bis 5, in welchem Doppel-n-Ringsysteme eingesetzt werden, welche das Tetramethylammoniumkation als Teil des Doppel-n-Ring-Silikats umfassen.

7. Verfahren nach Anspruch 6, in welchem Doppel-n-Ringsysteme eingesetzt werden, welche das Tetramethylammoniumkation enthalten, um damit SCS-1, SCS-2, SCS-4, Dodecasil-3C, TMA-Zeolith T oder TMA-Sodalit herzustellen.

8. Verfahren nach irgendeinem der Ansprüche 1 bis 5, in welchem ein Doppel-n-Ringsystem eingesetzt wird, welches das Tetraethylammoniumkation als Teil des Doppel-n-Ring-Silkats umfaßt.

9. Verfahren nach Anspruch 8, in welchem ein Doppel-3fach-Ringsystem eingesetzt, wird, welches das Tetraethylammoniumkation enthält, um damit ZSM-12, Zeolith Beta, Zeolith T oder Zeolith L herzustellen.

10. Verfahren nach irgendeinem der Ansprüche 1 bis 9, in welchem eine Lösung oder ein Gel verwendet wird, welches zusätzlich eine Quelle für ein organisches Kation enthält.

11. Verfahren nach Anspruch 10, in welchem Diethenolamin, Pyridin oder ein Tetraalkylammoniumhalogenid verwendet werden.

12. Verfahren nach Anspruch 11, in welchem Tetramethyl- oder Tetraethylammoniumbromid oder -chlorid oder Tetrapropylammoniumbromid oder -chlorid verwendet wird.

13. Verfahren nach irgendeinem der Ansprüche 1 bis 9, in welchem von der Anwesenheit einer anorganischen Säure, insbesondere Schwefelsäure, in der Lösung oder dem Gel Gebrauch gemacht wird.

14. Verfahren nach irgendeinem der Ansprüche 1 bis 13, in welchem in der Ausgangslösung oder dem Ausgangsgel ein Metallosilikat-Clathrat mitverwendet wird.

15. Verfahren nach Anspruch 13, in welchem in der Ausgangslösung oder dem Ausgangsgel ein Aluminosilikat-Clathrat oder eine Vorläuferverbindung davon mitverwendet wird.

16. Ein Verfahren nach irgendeinem der Ansprüche 1 bis 15, in welchem in der Ausgangslösung oder dem Ausgangsgel eine weitere Metallquelle mitverwendet wird.

17. Verfahren nach Anspruch 16, in welchem eine Metallquelle mitverwendet wird, die Aluminium, Gallium oder Eisen oder eine Verbindung dieser Metalle enthält.

18. Kristalline (Metallo)silikate, welche nach einem Verfahren, wie in irgendeinem oder mehreren der vorstehenden Ansprüche beansprucht, hergestellt worden sind.

19. Verwendung der kristallinen (Metallo)silikate, die nach einem Verfahren, wie in irgendeinem oder mehreren der Ansprüche 1 bis 17 beansprucht, hergestellt worden sind, gegebenenfalls nach teilweiser und/oder vollständiger Trocknung und/oder Calcinierung, als Molekularsiebe.

20. Verwendung der kristallinen (Metallo)silikate, die nach einem Verfahren, wie in einem oder mehrerer der Ansprüche 1 bis 17 beansprucht, hergestellt worden sind, gegebenenfalls nach teilweiser oder vollständiger Trocknung und/oder Calcinierung, als Katalysatoren oder Katalysatorträger.

## Revendications

1. Procédé pour la préparation de (métallo) silicates cristallins et/ou de leurs dérivés à partir d'une source de silice, d'une source de cations organiques, d'une source d'eau et éventuellement d'une source de métal alcalin ou alcalino-terreux et/ou d'aluminium et/ou d'un autre métal, dans lequel un (métallo) silicate cristallin est produit dans des conditions de synthèse à partir d'une solution ou d'un gel dans lesquels au moins 30 %, sur une base atomique, du silicium présent dans la solution ou dans le gel provient d'un ou plusieurs clathrates de (métallo) silicates à cycles n-gonaux doubles d'ammonium quaternaire ou de phosphonium-cristallisés, n étant 3, 4 ou 5.

2. Procédé selon la revendication 1, dans lequel on utilise une solution ou un gel dans lesquels au moins 40 %, sur une base atomique, du silicium présent dans la solution ou le gel provient d'un ou plusieurs clathrates de (métallo) silicates à cycles n-gonaux doubles d'ammonium quaternaire ou de phosphonium cristallisés, n étant 3, 4 ou 5.

3. Procédé selon la revendication 2, dans lequel on utilise une solution ou un gel dans lesquels plus de 50 %, sur une base atomique, du silicium présent dans la solution ou dans le gel provient d'un ou plusieurs clathrates de (métallo) silicates à cycles n-gonaux doubles d'ammonium quaternaire ou de phosphonium cristallisés, n étant 3, 4 ou 5.

4. Procédé selon une ou plusieurs des revendications 1-3, dans lequel la température est maintenue entre 75°C et 250°C, en particulier entre 125°C et 225°C.

5. Procédé selon une ou plusieurs des revendications 1-4, dans lequel la solution ou le gel de départ sont maintenus pendant une période comprise entre 12 et 750 heures dans des conditions de formation de cristaux, en particulier entre 24 et 250 heures.

6. Procédé selon une ou plusieurs des revendications 1-5, dans lequel on utilise des systèmes n-gonaux doubles comprenant le cation de tétraméthylammonium comme partie du silicate n-gonal double.

7. Procédé selon la revendication 6, dans lequel on utilise des systèmes tétragonaux doubles comprenant le cation de tétraméthylammonium pour obtenir les produits SCS-1, SCS-2, SCS-4, dodecasil-3C, TMA-zéolite T ou TMA-sodalite.

8. Procédé selon une ou plusieurs des revendications 1-5, dans lequel on utilise un système n-gonal double comprenant le cation de tétraéthylammonium comme partie du silicate n-gonal double.

9. Procédé selon la revendication 8, dans lequel on utilise un système trigonal double comprenant le cation de tétraéthylammonium pour obtenir les produits ZSM-12, zéolite bêta, zéolite T ou zéolite L.

10. Procédé selon une ou plusieurs des revendications 1-9, dans lequel on utilise une solution ou un gel contenant en outre une source d'un cation organique.

11. Procédé selon la revendication 10, dans lequel on utilise la diéthanol amine, la pyridine ou un halogénure de tétraalcoylammonium.

12. Procédé selon la revendication 11, dans lequel on utilise du bromure ou chlorure de tétra(m)éthylammonium ou du bromure ou chlorure de tétrapropylammonium.

13. Procédé selon une ou plusieurs des revendications 1-9, dans lequel on opère en présence d'un acide inorganique, en particulier d'acide sulfurique, dans la solution ou dans le gel.

14. Procédé selon une ou plusieurs des revendications 1-13, dans lequel on utilise un clathrate de métallo silicate dans la solution ou le gel de départ.

15. Procédé selon la revendication 13, dans lequel on utilise un clathrate d'alumino silicate ou un progéniteur de ce clathrate dans la solution ou le gel de départ.

16. Procédé selon une ou plusieurs des revendications 1-15, dans lequel on utilise une autre source de métal dans la solution ou le gel de départ.

17. Procédé selon la revendication 16, dans lequel on utilise une source de métal contenant de l'aluminium, du gallium ou du fer ou un composé d'un tel métal.

18. Les (métallo) silicates cristallins produits par un procédé selon une ou plusieurs des revendications précédentes.

19. Utilisation de (métallo) silicates cristallins produits par un procédé selon une ou plusieurs des revendications 1-17, éventuellement après séchage (partiel) et/ou calcination, comme tamis moléculaires.

20. Utilisation de (métallo) silicates cristallins produits par un procédé selon une ou plusieurs des revendications 1-17, éventuellement après séchage (partiel) et/ou calcination, comme catalyseurs ou supports de catalyseurs.
